# EUROPEAN PATENT SPECIFICATION

(11) **EP 2 953 577 B1**
(45) Date of publication and mention of the grant of the patent: **15.05.2019**
(21) Application number: 14716982.5
(22) Date of filing: 04.02.2014
(51) Int. Cl.: A61C 17/06

(54) **DISPOSABLE SALIVA EJECTOR FOR USE IN DENTISTRY**
EINWEGSPEICHELEJEKTOR ZUR VERWENDUNG IN DER ZAHNMEDIZIN
ASPIRATEUR DE SALIVE JETABLE DESTINÉ À ÊTRE UTILISÉ EN DENTISTERIE

(30) Priority: 05.02.2013 IT LU20130003
(43) Date of publication of application: 16.12.2015
(73) Proprietor: Tardelli, Enio, 55025 Ghivizzano (LU) (IT)
(72) Inventor: Tardelli, Enio, 55025 Ghivizzano (LU) (IT)
(74) Representative: Mari, Marco Giovanni
(86) International application number: PCT/IT2014/000032
(87) International publication number: WO 2014/122683

(56) References cited:
- FR-A1- 2 952 525
- US-A- 3 333 340
- US-A- 4 417 874
- US-A- 5 425 637

## Description

The invention is aimed at the field of dental instruments, and in particular the invention relates to a disposable saliva ejector for use in dentistry.

Particularly long or complex dental operations can cause excessive salivation in the patient, which is remedied simply by inserting a saliva ejector connected to a suction device into the mouth of the patient.

Current saliva ejectors consist of a tube made of soft plastic, generally medical grade non-toxic PVC, obtained by extrusion.

During the extrusion stage a metal core, made with a wire having a section of around 1-1.5 mm, is embedded in the thickness of the tube.

This metal wire has the specific purpose of allowing the tube to be bent into a U-shape at the time of its use during dental sessions, to adapt to the shape of the mouth of the patient and to remain permanently bent in this shape, overcoming the natural propensity of the plastic to return to the original elongated position.

A filtering tip, provided with a plurality of holes, again made of PVC and obtained separately by injection, is then applied permanently or removably to the plastic tube with metal wire core.

These saliva ejectors have some limits and disadvantages.

The presence of the metal wire positioned in the thickness of the tube makes it necessary to produce an ejector of increased thickness with respect to the thickness required to overcome the forces at play, resulting in the use of larger quantities of raw material and increased costs.

Besides causing an increase in the weight of the ejector, with discomfort for the patient, the use of a larger quantity of raw material has a high environmental impact: as this is a widely used disposable product, the volume of waste is considerable and, even more unfavorably, being composite, ejectors are difficult to recycle as metal and plastic are incompatible waste products.

The increased thickness of the ejectors also reduces the suction section, making the ejector less efficient.

Moreover, the combined extrusion process used to produce conventional ejectors requires complex, and therefore costly, production plants.

Further, the stiffening effect of the metal wire on the ejector is temporary and the ejector inconveniently tends to open out again, returning to its extended position.

Moreover, during bending of the ejector, it is possible for the metal wire to perforate the plastic and protrude outward, with the risk of injuring the patient.

The filtering tip, if positioned removably on the ejector, is at risk of becoming unintentionally detached with possible serious consequences if the ejector is inside the mouth of the patient and the tip is accidentally swallowed.

At the same time, the tip makes the ejector less flexible and prevents it from being bent into a U-shape in proximity of its end.

US 4 417 874 relates to a disposable saliva ejector for use in dentistry comprising a tube made of plastic material, adapted to occupy partially a patient's mouth, having a first end connectable to a suction system of know type. Said tube comprises a plurality of corrugated portions spaced by smooth portions. Said corrugated portions being used to adjust the tube within the patient's mouth, around its dental arc.

US 3 333 340 A relates to an arch made of rigid plastic material separated from it and adapted to be reversibly applied to a saliva ejector to cooperate with the ejector to give to said ejector a substantially U-shaped permanent bend.

The object of the invention is therefore to produce a saliva ejector that is practical, comfortable, functional, light and safe for the patient.

A further object of the invention is to produce an ejector with lower production costs and a low environmental impact, which is easy to recycle.

These objects are achieved with an improved disposable saliva ejector for use in dentistry provided in a kit comprising:
- a tube made of plastic material, having a first end connectable to a suction system of known type and a second free end adapted to occupy the mouth of a patient, wherein said tube comprises a plurality of corrugated portions;
- an arch made of rigid plastic material separate from it and adapted to cooperate with one of said corrugated portions to give to said corrugated portion of said ejector a substantially U-shaped permanent bend,
wherein said corrugated portions are two and are spaced apart, preceded and followed by portions of smooth tube, and:
- a first corrugated portion is arranged in proximity of said free end of the ejector, made of a smooth tube, adapted to occupy the mouth of a patient;
- a second corrugated portion is arranged closer to said first end of the ejector connectable to a suction system with respect to said first corrugated portion,
characterized in that said arch comprises two end collars adapted to embrace the smooth portions of said tube outside said second corrugated portion.

According to a preferred embodiment of the invention, said arch comprises a cradle adapted to longitudinally contain said second corrugated portion.

Advantageously, said cradle has an extension at least equal to the length of said second corrugated portion in bent configuration.

In a particularly preferred embodiment of the invention, said second free end of the ejector comprises a filtering structure obtained on the lateral surface thereof.

In particular, said filtering structure comprises a plurality of openings, and said openings are holes or slits or longitudinal cuts that extend from the edge of said second free end.

The improved ejector according to the invention has numerous advantages, mainly due to its particular structure, without metal core.

The corrugated portions provided along the tube forming the ejector make it extremely versatile and adaptable to any operating condition.

The first corrugated portion allows the end portion of the ejector, and therefore its free suction end, to be elongated, bent and oriented at 360°, adapting it to any operating condition.

Even more advantageously, this first corrugated portion allows the free end of the ejector to be arranged at any moment in a position parallel to the mandibular axis, which is the best direction for correct and efficient suction of saliva.

The bend of the corrugated portion in proximity of the free end and its traction also allow the suction tip to move back considerably, so that suction is even more effective.

The second corrugated portion allows the ejector to be easily bent to be arranged comfortably over the mouth of the patient during dental operations.

To maintain the second corrugated portion of the tube in a permanent bent position, the ejector is supplied to operators advantageously provided with an arch adapted to give it a substantially U-shaped structure and therefore a permanent bend.

The arch holds the second corrugated portion of the tube that forms the ejector safety in position, ensuring practical and comfortable use of the ejector.

The arch also gives the ejector the stiffness that allows it to maintain its shape in time, eliminating the problem of "return" of the plastic that occurs with conventional ejectors, which tend to quickly return to their original extended and elongated position.

The absence of the metal core allows the use of plastic tubes of reduced thickness, employing less material and therefore saving in raw materials and production.

At the same time, it is possible to obtain an ejector with a larger inner suction section, promoting suction also of particles of larger dimensions, such as some debris from operations.

The ejector produced according to the invention, made entirely of plastic, is much lighter, easier, faster and less expensive to produce, and is also easy to dispose of and recycle with a lower environmental impact.

The openings made in proximity of the free end of the ejector make it more flexible and allow it to deform naturally when placed against the cheek or gum of the patient, without causing any discomfort.

Even more advantageously, these openings allow suction not only in line with the ejector, but also orthogonally thereto, speeding up the steps of cleaning the saliva.

The absence of the tip is also advantageous, eliminating the risk of this becoming accidentally detached and being swallowed by the patient.

Further features and advantages of the invention will be more evident from the detailed description set forth below, with the aid of the figures, which represent a preferred embodiment thereof, shown by way of nonlimiting example, wherein:
Figs. 1 and 2 represent, respectively in a transparent axonometric view and in a side view, an improved disposable saliva ejector for use in dentistry according to the invention;
Figs. 3 and 4 represent, in axonometric views, two components of the ejector of Fig. 1.

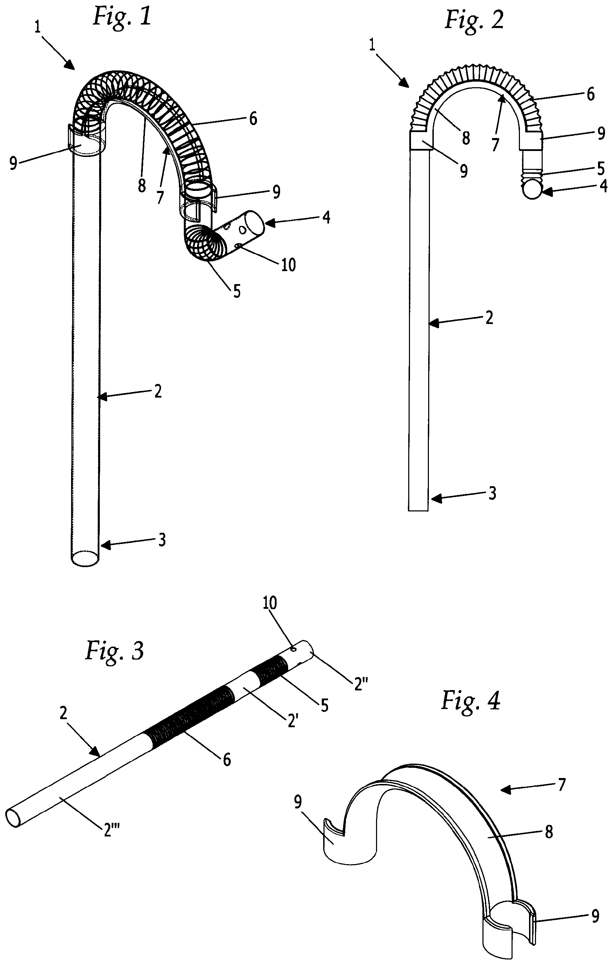

With reference to Figs. 1 and 2, there is shown a disposable saliva ejector 1 for dentists substantially comprising a tube 2, made of non-toxic plastic material and suitable for medical use, and an arch 7, adapted to give said tube 2 a certain permanent curvature.

Said ejector 1 comprises a first end 3 connectable to a suction system and a second free end 4 adapted to occupy the mouth of a patient.

As shown clearly in Fig. 3, said tube 2 also comprises two corrugated portions 5, 6.

Each corrugated portion 5, 6 is similar to a bellows with a "creased" appearance on the outside.

Said corrugated portions 5, 6 are spaced apart, preceded and followed by portions of smooth tube 2', 2", 2"'.

A first corrugated portion 5 is arranged in proximity of said free end 4 of said ejector 1 and has a length of around 10 mm.

Said first corrugated portion 5 is goose-necked and extensible, and can extend by means of traction up to around 13 mm, to allow the free end 4 to reach any corner of the mouth and be arranged advantageously parallel to the mandibular axis.

A second corrugated portion 6 is provided along the tube 2, arranged closer to the first end 3 of the ejector 1 connectable to a suction system with respect to said first corrugated portion 5.

This second corrugated portion 6 is adapted to cooperate with said arch 7, also made of rigid non-toxic plastic material, to give the ejector 1 a U-shaped bend and maintain it permanently in position.

As can be seen from Fig. 4, said arch 7 comprises a cradle 8 and two end collars 9.

Said collars 9 are adapted to embrace the smooth portions 2', 2'" of said tube 2 outside said second corrugated portion 6, to hold the tube permanently associated with the arch 7.

Said cradle 8 is adapted to longitudinally contain said second corrugated portion 6, to give it the correct operating shape.

As can be seen in Figs. 1 and 2, said cradle 8 has an extension at least equal to the length of maximum extension of said second corrugated portion 6, determined by its U-shaped bend, so that the two collars 9 of the arch 7 embrace the smooth portions 2', 2"' of tube 2 outside the corrugated portion 6, where the tube 2 has greater rigidity and coupling is more stable.

The free end 4 of the ejector 1 comprises a filtering structure obtained in the lateral surface thereof.

Said free end 4 in fact also consists of a portion of smooth tube 2", with a length of around 10 mm, partly occupied by a series of openings 10 obtained in its lateral surface.

In the embodiment of the ejector 1 shown, as can be seen in Figs. 1 and 3, said openings 10 are produced with holes appropriately arranged in proximity of the free end 4 of the ejector 1, along its lateral surface and without occupying the edge of said free end 4.

In alternative embodiments, said holes can be replaced by slits, or by longitudinal cuts arranged equidistant along the circumference of the section of the ejector 1, extending for a few mm from the edge of said second free end 4.

Use of the invention is described below.

The disposable ejector 1 according to the invention is supplied to operators in a kit, closed in a sterile sachet containing tube 2 and arch 7 separated.

The dentist takes the tube 2, bends the second corrugated portion 6 and arranges it along the arch 7, taking care to secure the smooth portions 2', 2'" of the tube 2 inside the two end collars 9, by applying slight pressure on the tube.

After having permanently bent the ejector 1, the operator fits it to the suction device and positions it over the lower lip of the patient, using the outside of the cradle 8 of the arch as a supporting surface.

Subsequently, by stretching the first corrugated portion 5 of the ejector 1, rotating and tilting it according to need, the dentist can reach any corner of the mouth of the patient with the free end 4 and start the saliva suction process, which can continue comfortably for the whole of the operation.

## Claims

1. An improved disposable saliva ejector (1) for use in dentistry provided in a kit comprising:
- a tube (2) made of plastic material, having a first end (3) connectable to a suction system of known type and a second free end (4) adapted to occupy the mouth of a patient, wherein said tube (2) comprises a plurality of corrugated portions (5, 6);
- an arch (7) made of rigid plastic material separate from it and adapted to cooperate with one of said corrugated portions (6) to give to said corrugated portion of said ejector (1) a substantially U-shaped permanent bend wherein said corrugated portions are two (5, 6) and are spaced apart, preceded and followed by portions of smooth tube (2', 2", 2'"), and:
- a first corrugated portion (5) is arranged in proximity of said free end (4) of the ejector (1), made of a smooth tube (2"), adapted to occupy the mouth of a patient;
- a second corrugated portion (6) is arranged closer to said first end (3) of the ejector (1) connectable to a suction system with respect to said first corrugated portion (5),
**characterized in that** said arch (7) comprises two end collars (9) adapted to embrace the smooth portions (2', 2"') of said tube (2) respectively before and after said second corrugated portion (6).

2. The improved disposable saliva ejector (1) according to claim 1 **characterized in that** said arch (7) comprises a cradle (8) adapted to longitudinally contain said second corrugated portion (6).

3. The improved disposable saliva ejector (1) according to claim 2, **characterized in that** said cradle (8) has an extension at least equal to the length of said second corrugated portion (6) in bent configuration.

4. The improved disposable saliva ejector (1) according to claim 1, **characterized in that** said second free end (4) of the ejector (1) comprises a filtering structure obtained on the lateral surface thereof.

5. The improved disposable saliva ejector (1) according to claim 4, **characterized in that** said filtering structure comprises a plurality of openings (10).

6. The improved disposable saliva ejector (1) according to claim 5, **characterized in that** said openings (10) are holes or slits or longitudinal cuts that extend from the edge of said second free end (4).

## Patentansprüche

1. Ein verbesserter Einmal-Speichelabsauger (1) für den Gebrauch in der Zahnmedizin, in einem Kit geliefert, umfassend:
- einen Schlauch (2) aus Plastik, mit einem ersten Ende (3), anschließbar an ein Absaugsystem bekannter Art, und mit einem zweiten freien Ende (4), geeignet, um den Mund eines Patienten zu belegen, wobei besagter Schlauch (2) eine Vielzahl von geriffelten Abschnitten (5, 6) umfasst;
- ein Bogen (7) aus steifem Plastik, von ihm getrennt, und geeignet, um mit einem der besagten geriffelten Abschnitte (6) zusammenzuarbeiten, um dem besagten geriffelten Abschnitt des besagten Absaugers (1) eine im Wesentlichen U-förmige permanente Biegung zu verleihen, wobei besagte geriffelte Abschnitte zwei (5, 6) sind und sich in einiger Entfernung voneinander befinden, vorausgehend und nachfolgend Abschnitte von glattem Schlauch (2', 2", 2"'), und:
- ein erster geriffelter Abschnitt (5) ist in der Nähe von dem besagten freien Ende (4) des Absaugers (1) angeordnet, das aus einem glatten Schlauch (2") besteht, geeignet, um den Mund eines Patienten zu belegen;
- ein erster geriffelter Abschnitt (6) ist näher bei dem besagten ersten Ende (3) des Absaugers (1) angeordnet, anschließbar an ein Absaugsystem in Bezug auf besagten ersten geriffelten Abschnitt (5),
**gekennzeichnet dadurch, dass** besagter Bogen (7) zwei Klemmringe (9) umfasst, geeignet, um die glatten Abschnitte (2', 2"') des besagten Schlauchs (2) zu umfassen, die sich vor, beziehungsweise nach dem zweiten geriffelten Abschnitt (6) befinden.

2. Der verbesserte Einmal-Speichelabsauger (1) gemäß Anspruch 1, **gekennzeichnet dadurch, dass** besagter Bogen (7) eine Wiege (8) umfasst, geeignet, um der Länge nach besagten zweiten geriffelten Abschnitt (6) aufzunehmen.

3. Der verbesserte Einmal-Speichelabsauger (1) gemäß Anspruch 2, **gekennzeichnet dadurch, dass** besagte Wiege (8) eine Ausdehnung besitzt, die mindestens gleich ist der Länge des besagten zweiten geriffelten Abschnitts (6) in gebogener Konfiguration.

4. Der verbesserte Einmal-Speichelabsauger (1) gemäß Anspruch 1, **gekennzeichnet dadurch, dass** besagtes freies Ende (4) des Absaugers (1) eine filtrierende Struktur umfasst, die auf der seitlichen Fläche von diesem erzielt wurde.

5. Der verbesserte Einmal-Speichelabsauger (1) gemäß Anspruch 4, **gekennzeichnet dadurch, dass** besagte filtrierende Struktur eine Vielzahl von Öffnungen (10) umfasst.

6. Der verbesserte Einmal-Speichelabsauger (1) gemäß Anspruch 5, **gekennzeichnet dadurch, dass** besagte Öffnungen (10) Löcher oder Schlitze oder Längsschnitte sind, die sich vom Rand des besagten freien Endes (4) ausdehnen.

## Revendications

1. Éjecteur de salive jetable perfectionné (1) destiné à être utilisé en dentisterie, fourni dans un kit comprenant :
- un tube (2) en matière plastique, ayant une première extrémité (3) pouvant être raccordée à un système d'aspiration de type connu et une seconde extrémité libre (4) adaptée pour occuper la bouche d'un patient, où ledit tube (2) comprend une multitude de portions ondulées (5, 6) ;
- une arche (7) en matière plastique rigide séparée de celui-ci et adaptée pour coopérer avec l'une desdites portions ondulées (6) pour donner auxdites portions ondulées dudit éjecteur (1) une courbure permanente substantiellement en forme de U où lesdites portions ondulées sont deux (5, 6) et sont espacés, précédés et suivis par des portions de tube lisse (2', 2", 2"'), et :
- une première portion ondulée (5) est disposée à proximité de ladite extrémité libre (4) de l'éjecteur (1), constitué d'un tube lisse (2"), adaptée pour occuper la bouche d'un patient ;
- une deuxième portion ondulée (6) est disposée plus près de ladite première extrémité (3) de l'éjecteur (1) pouvant être connectée à un système d'aspiration par rapport à ladite première portion (5),
**caractérisé par le fait que** ladite arche (7) comprend deux colliers d'extrémité (9) adaptés pour englober les portions lisses (2', 2") dudit tube (2) respectivement avant et après ladite deuxième portion ondulée (6).

2. Éjecteur de salive jetable perfectionné (1) selon la revendication 1, **caractérisé par le fait que** ladite arche (7) comprend un berceau (8) adapté pour contenir longitudinalement ladite deuxième portion ondulée (6).

3. Éjecteur de salive jetable perfectionné (1) selon la revendication 2, **caractérisé par le fait que** ledit berceau (8) a une extension au moins égale à la longueur de ladite deuxième portion ondulée (6) dans une configuration courbée.

4. Éjecteur de salive jetable perfectionné (1) selon la revendication 1, **caractérisé par le fait que** ladite deuxième extrémité libre (4) de l'éjecteur (1) comprend une structure filtrante obtenue sur sa surface latérale.

5. Éjecteur de salive jetable perfectionné (1) selon la revendication 4, **caractérisé par le fait que** ladite structure filtrante comprend une multitude d'ouvertures (10).

6. Éjecteur de salive jetable perfectionné (1) selon la revendication 5, **caractérisé par le fait que** lesdites ouvertures (10) sont des trous ou des fentes ou des coupes longitudinales qui s'étendent depuis le bord de ladite deuxième extrémité libre (4).
